# FASCICULE DE BREVET EUROPEEN

(11) **EP 0 488 879 B1**
(45) Date de publication et mention de la délivrance du brevet: **11.01.1995**
(21) Numéro de dépôt: 91403194.3
(22) Date de dépôt: 26.11.1991
(51) Int. Cl.: F16J 15/02

(54) **Joint d'étanchéité statique**
Statische Abdichtung
Static sealing

(30) Priorité: 26.11.1990 FR 9014742
(43) Date de publication de la demande: 03.06.1992
(73) Titulaire: PU S.A., 52200 Langres (FR)
(72) Inventeur: Hammann, Georges, F-52800 Nogent en Bassigny (FR)
(74) Mandataire: Leszczynski, André

(56) Documents cités:
- DE-U- 8 705 592
- FR-A- 1 227 402
- US-A- 4 192 520

## Description

La présente invention est relative à un joint d'étanchéité statique destiné à réaliser une étanchéité entre deux pièces fixes présentant des surfaces planes en regard, le joint étant logé dans une gorge ménagée dans l'une des surfaces.

A titre d'application particulière nullement limitative d'un tel joint, on peut citer la réalisation d'une étanchéité entre le bloc de culasse d'un moteur, notamment de véhicule automobile, et le couvercle formant cache-culasse fixé sur le bloc de culasse.

On utilise habituellement à cet effet des joints de différentes sections, tels que des joints toriques (O rings) que l'on met en place dans la gorge prévue dans l'une des surfaces en regard, ce joint étant déformé par écrasement lors du rapprochement des surfaces des pièces entre lesquelles l'étanchéité doit être réalisée. En position finale, les pièces sont alors en appui l'une contre l'autre le long de leurs surfaces planes en regard.

Ce contact de surface dans le cadre de l'application envisagée à des moteurs présente l'inconvénient de ne pas assurer une isolation suffisante vis-à-vis des bruits de fonctionnement provenant du bloc de culasse.

Pour éviter ce type d'inconvénient, on a proposé par exemple dans le document US-A-4 192 520, de réaliser des joints d'étanchéité statique de section sensiblement en forme de T présentant un corps apte à être logé dans la gorge de l'une des pièces, par exemple un couvercle formant cache-culasse, ledit corps comportant à sa partie inférieure des branches s'étendant latéralement de part et d'autre du corps et formant des bourrelets d'étanchéité en étant écrasées entre les surfaces en regard lors du rapprochement et du serrage des pièces. Les surfaces en regard ne viennent alors plus en contact mutuel lors du serrage des pièces, par suite de la présence entre elles des bourrelets d'étanchéité.

Les branches latérales s'étendant de part et d'autre du corps sont généralement de section carrée ou rectangulaire et présentent une hauteur relativement importante pour ne pas être cisaillées lors du serrage. De ce fait, des efforts de serrage très élevés doivent être appliqués pour suffisamment déformer les branches pour assurer une étanchéité satisfaisante, et le volume de matière comprimée ne peut être évacué que sur les bords extérieurs des branches latérales, ce qui peut provoquer des tensions de surface trop fortes sur l'extrémité des branches.

La présente invention se propose de réaliser un joint d'étanchéité statique destiné à réaliser une étanchéité entre deux pièces fixes présentant des surfaces planes en regard, non en appui mutuel, le joint étant logé dans une gorge ménagée dans l'une des surfaces, qui de par la forme de sa section permet d'assurer une excellente fonction d'étanchéité, notamment vis-à-vis des poussières, tout en évitant les inconvénients des joints à section en forme de T connus, notamment en ce qui concerne l'effort de serrage.

Le joint selon l'invention se caractérise essentiellement par le fait que les branches latérales réalisées de part et d'autre du corps sont réunies à celui-ci par des zones de section réduite, ledit corps se prolongeant au-delà de sa zone à laquelle se raccordent les branches latérales par un bourrelet inférieur dont la section se réduit en direction de son extrémité.

Les zones d'épaisseur réduite reliant les branches latérales au corps sont avantageusement réalisées par des évidements en forme de gorge ménagés respectivement dans les faces supérieures et inférieures desdites branches latérales.

Le bourrelet inférieur du joint présente de préférence une section de profil incurvé et est dimensionné de manière telle que son volume corresponde sensiblement à la somme des volumes des évidements définissant les zones de section réduite reliant les branches latérales au corps.

Ainsi, lors du rapprochement des pièces entre lesquelles l'étanchéité doit être réalisée, le bourrelet se trouve écrasé au contact de la pièce opposée à celle comportant la gorge logeant le corps du joint et se déforme de manière qu'une excellente étanchéité, sur des largeurs importantes soit réalisée entre les surfaces des pièces en regard sans nécessiter d'écrasement notable des branches latérales du joint. En d'autres termes, le serrage est terminé et une bonne étanchéité est obtenue pratiquement dès que les surfaces des pièces entre lesquelles l'étanchéité doit être réalisée viennent au contact des faces supérieures et respectivement inférieures des branches latérales du joint qui jouent ainsi le rôle de limiteur d'écrasement du joint sans augmenter pour autant l'effort de serrage.

L'effort de serrage est ainsi réduit par rapport aux joints en forme de T classiques dans la mesure où il n'est avec le joint selon l'invention nécessaire de comprimer qu'un volume de matière correspondant au bourrelet qui est notablement plus faible que le volume soumis à compression dans les joints en forme de T c'est-à-dire toute la partie inférieure du corps ainsi que les branches latérales.

De façon à garantir une étanchéité parfaite en fond de gorge, le corps du joint selon l'invention comporte également avantageusement à sa partie supérieure une nervure axiale en saillie destinée à être écrasée lors du serrage des pièces en regard. Des nervures axiales peuvent également être prévues sur le bourrelet extérieur.

Le joint selon l'invention peut être réalisé avec les mêmes matériaux que les joints traditionnels, notamment en caoutchouc, en élastomère.

Dans le but de mieux faire comprendre l'invention, on va maintenant en décrire à titre d'exemple en aucune manière limitatif, un mode de réalisation en se référant au dessin annexé dans lequel :
- la figure 1 est une vue en coupe d'un joint selon l'invention,
- la figure 2 illustre le joint mis en place dans une gorge avant déformation,
- la figure 3 illustre le joint dans une phase intermédiaire au cours du rapprochement des pièces entre lesquelles l'étanchéité doit être réalisée,
- la figure 4 est une vue analogue à la figure 3 après compression du joint en position d'utilisation.

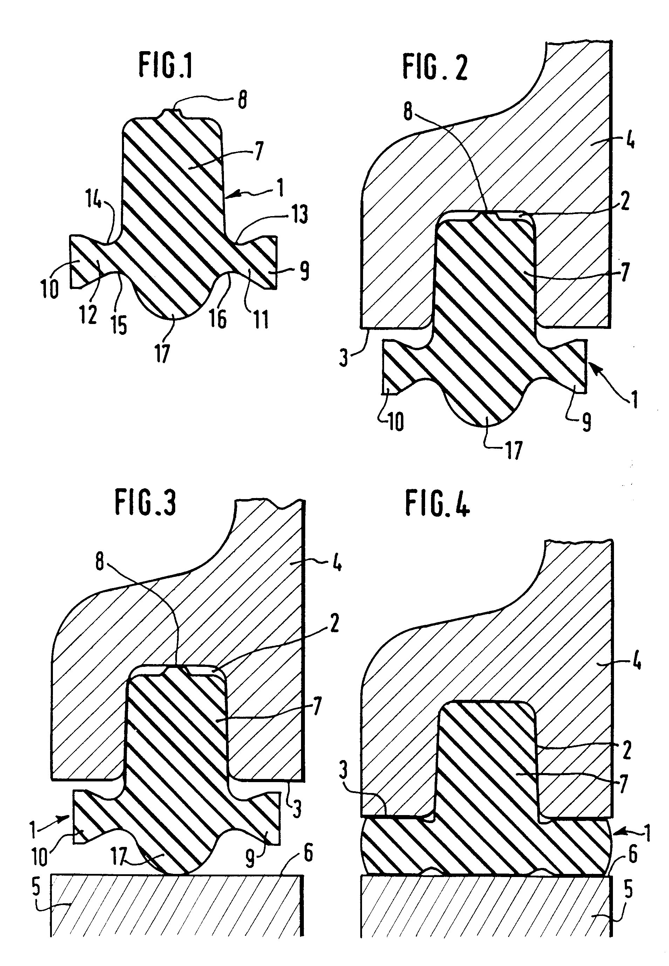

Le joint illustré, désigné globalement par 1 est destiné comme on le voit sur les figures 2 à 4 à être logé dans une gorge 2 ménagée dans une surface 3 d'une pièce 4 telle qu'un couvercle formant cache-culasse d'un moteur de véhicule automobile.

La pièce 4 est destinée à être montée serrée sur une pièce 5 telle qu'un bloc de culasse comportant une surface plane 6 en regard de la surface 3.

Dans l'application où la pièce 4 est un couvercle formant cache-culasse elle peut être réalisée en métal ou en matière plastique, le bloc de culasse 5 étant en métal.

Le joint 1 en caoutchouc ou en élastomère, destiné à réaliser l'étanchéité entre les surfaces 3 et 6 des pièces 4 et 5, présente un corps 7 de section sensiblement rectangulaire dont la largeur correspond sensiblement à la largeur de la gorge 2, le corps étant apte à être logé dans ladite gorge 2 comme illustré sur la figure 2 du dessin.

A sa partie supérieure, le corps 7 présente des arêtes arrondies et une nervure axiale 8 en saillie vers le haut venant buter contre le fond de la gorge 2 comme illustré aux figures 2 et 3.

Le joint comporte deux branches latérales 9 et 10 réunies chacune au corps 7 du joint par des zones 11 et respectivement 12 de section réduite.

Les zones de section réduite 11, 12 sont réalisées par la présence d'évidements 13, 14, 15, 16 en forme de gorges dans les faces supérieures et respectivement inférieures des branches 9 et 10.

Dans l'exemple illustré, chacune des gorges présente en section un profil défini par une génératrice possédant à partir du corps un tronçon sensiblement semi-circulaire et un tronçon linéaire.

A la partie inférieure du joint, le corps 7 est prolongé par un bourrelet de profil arrondi 17, dans l'exemple illustré. Le volume du bourrelet 17 correspond sensiblement à la somme des volumes des évidements 13, 14, 15 et 16.

Le bourrelet peut présenter une section sensiblement semi-circulaire ou trapézoïdale avec une partie inférieure de profil arrondi, une forme pyramidale tronquée ou toute autre forme convexe.

Pour la réalisation de l'étanchéité, l'on met d'abord en place le joint 1 dans la gorge 2 de la pièce 4 comme illustré à la figure 2 et l'on rapproche les pièces 4 et 5, la figure 3 illustrant une position en cours de serrage avec l'extrémité du bourrelet 17 au contact de la surface 6 de la pièce 5. C'est à partir de la position de la figure 3 que commence la compression du joint jusqu'à la position finale illustrée à la figure 4. Comme on le voit sur cette figure, la matière écrasée du bourrelet 17 vient sensiblement remplir les zones des évidements 13 à 16 prévus sur le joint avant compression, de telle sorte qu'en position finale, le joint remplit pratiquement tout l'espace entre les surfaces 3 et 6 en regard.

Le serrage provoquant le rapprochement des surfaces 3 et 6 est arrêté sensiblement au moment où ces surfaces viennent au contact des faces supérieures et inférieures des branches latérales 9 et 10, ce qui évite d'avoir à appliquer un effort de serrage supplémentaire pour comprimer ces branches latérales. L' effort de serrage est ainsi limité à celui nécessaire à l'écrasement du bourrelet 17. Les branches latérales du joint améliorent en outre la fonction d'étanchéité dans le cas où le fluide vis-à-vis duquel l'étanchéité doit être réalisée est soumis à une pression intérieure, par un effet de coins déformables.

## Revendications

1. Joint d'étanchéité statique destiné à réaliser une étanchéité entre deux pièces fixes présentant des surfaces planes en regard, non en appui mutuel, le joint étant logé dans une gorge ménagée dans l'une des surfaces et présentant un corps apte à être logé dans ladite gorge et des branches latérales réalisées de part et d'autre, caractérisé par le fait que lesdites branches latérales (9, 10) sont réunies audit corps (7) par des zones de section réduite (11, 12), ledit corps se prolongeant au-delà de sa zone à laquelle se raccordent les branches latérales par un bourrelet inférieur (17) dont la section se réduit en direction de son extrémité.

2. Joint d'étanchéité selon la revendication 1, caractérisé par le fait que les zones d'épaisseur réduite (11, 12) reliant les branches latérales au corps sont réalisées par des évidements en forme de gorges (13, 14, 15, 16) ménagés respectivement dans les faces supérieures et inférieures desdites branches latérales (9, 10).

3. Joint d'étanchéité selon l'une quelconque des revendications 1 et 2, caractérisé par le fait que ledit bourrelet inférieur (17) présente une section de profil incurvé, notamment sensiblement semi-circulaire ou trapézoïdale avec une partie inférieure de profil arrondi.

4. Joint d'étanchéité selon l'une quelconque des revendications 2 et 3, caractérisé par le fait que le volume du bourrelet inférieur (17) correspond sensiblement à la somme des volumes des évidements (13, 14, 15, 16) définissant les zones de section réduite reliant les branches latérales au corps.

5. Joint d'étanchéité selon l'une quelconque des revendications précédentes, caractérisé par le fait que le corps comporte à sa partie supérieure une nervure axiale (8) en saillie.

## Claims

1. Static seal intended for creating leaktightness between two fixed components having mutually facing plane surfaces, not in mutual bearing, the seal being seated in a groove formed in the one of the surfaces and having a body adapted to be seated in said groove and lateral arms formed on either side, characterized by the fact that said lateral arms (9, 10) are connected to said body (7) by zones of reduced section (11, 12), said body continuing, beyond its zone at which the lateral arms join, in a lower beading (17), the section of which decreases towards its end.

2. Seal according to Claim 1, characterized by the fact that the zones of reduced thickness (11, 12) connecting the lateral arms to the body are formed by groove-shaped recesses (13, 14, 15, 16) formed respectively in the upper and lower faces of said lateral arms (9, 10).

3. Seal according to any one of Claims 1 and 2, characterized by the fact that said lower beading (17) has a section of curved profile, notably substantially semicircular or trapezoidal with a lower part of rounded profile.

4. Seal according to any one of Claims 2 and 3, characterized by the fact that the volume of the lower beading (17) corresponds substantially to the sum of the volumes of the recesses (13, 14, 15, 16) defining the zones of reduced section connecting the lateral arms to the body.

5. Seal according to any one of the preceding Claims, characterized by the fact that the body comprises, in its upper part, a projecting axial rib (8).

## Patentansprüche

1. Statische Dichtung zur Abdichtung zwischen zwei stationären Bauteilen, die einander gegenüberliegende, aber nicht einander anliegende Flächen aufweisen, wobei die Dichtung in einer Rille in einer der Flächen angeordnet ist und einen zum Einfügen in diese Rille geeigneten Hauptteil und auf beiden Seiten angeordnete Seitenteile aufweist, dadurch gekennzeichnet, daß die Seitenteile (9, 10) über Bereiche (11, 12) verringerten Querschnitts mit dem Hauptteil (7) verbunden sind, der sich über den Bereich, an dem die Seitenteile ansetzen, mit einem unteren Wulst (179 mit zu seinem Ende hin sich verringerndem Querschnitt fortsetzt.

2. Dichtung nach Anspruch 1, dadurch gekennzeichnet, daß die Bereiche (11, 12) verringerter Dicke, die die Seitenteile mit dem Hauptteil verbinden, durch an den oberen und unteren Flächen der jeweiligen Seitenteile (9, 10) ausgeführte rillenförmige Vertiefungen (13, 14, 15, 16) gebildet sind.

3. Dichtung nach Anspruch 1 oder 2, dadurch gekennzeichnet, daß der untere Wulst (17) ein gekrümmtes, insbesondere im wesentlichen halbkreisförmiges oder mit einem verrundeten unteren Bereich versehenes trapezförmiges Profil aufweist.

4. Dichtung nach Anspruch 2 oder 3, dadurch gekennzeichnet, daß das Volumen des unteren Wulstes (17) im wesentlichen der Summe der Volumina der Vertiefungen (13, 14, 15, 16) entspricht, welche die die Seitenteile mit dem Hauptteil verbindenden Bereiche verringerten Querschnitts bilden.

5. Dichtung nach einem der vorhergehenden Ansprüche, dadurch gekennzeichnet, daß der Hauptteil in seinem oberen Teil eine vorspringende Axialrippe (8) aufweist.
